# EUROPÄISCHE PATENTSCHRIFT

(11) **EP 3 479 149 B1**
(45) Veröffentlichungstag und Bekanntmachung des Hinweises auf die Patenterteilung: **26.08.2026**
(21) Anmeldenummer: 17730784.0
(22) Anmeldetag: 16.06.2017
(51) Int. Cl.: G02B 3/08, B23B 1/00, B23B 5/36, B23B 27/20, B29D 11/00, G02C 7/08, G02B 27/00

(54) **FREIFORMFRESNELFLÄCHE, VERFAHREN ZUM HERSTELLEN EINER FREIFORMFRESNELFLÄCHE UND VERFAHREN ZUM ERSTELLEN EINES KONSTRUKTIONSDATENSATZES**
FREEFORM FRESNEL SURFACE, METHOD FOR PRODUCING A FREEFORM FRESNEL SURFACE AND METHOD FOR CREATING A CONSTRUCTION DATASET
SURFACE GAUCHE DE FRESNEL, PROCÉDÉ DE FABRICATION D'UNE SURFACE GAUCHE DE FRESNEL ET PROCÉDÉ DE CRÉATION D'UN JEU DE DONNÉES DE CONCEPTION

(30) Priorität: 01.07.2016 DE 102016112099; 26.08.2016 DE 102016115937
(43) Veröffentlichungstag der Anmeldung: 08.05.2019
(73) Patentinhaber: Tooz Technologies GmbH, 73430 Aalen (DE)
(72) Erfinder: RUDOLPH, Günter, 07743 Jena (DE); MICHELS, Georg, 73430 Aalen (DE); KRAUSE, Wolf, 73457 Essingen (DE)
(74) Vertreter: PATERIS PartmbB
(86) Internationale Anmeldenummer: PCT/EP2017/064824
(87) Internationale Veröffentlichungsnummer: WO 2018/001757

(56) Entgegenhaltungen:
- JP-A- H04 248 501
- JP-A- H04 248 501
- US-A- 6 070 980
- US-A- 6 070 980
- US-A1- 2002 071 187
- US-A1- 2002 071 187
- LI C J ET AL: "Ultra-precision machining of Fresnel lens mould by single-point diamond turning based on axis B rotation", THE INTERNATIONAL JOURNAL OF ADVANCED MANUFACTURING TECHNOLOGY, SPRINGER, LONDON, vol. 77, no. 5, 29 October 2014 (2014-10-29), pages 907 - 913, XP035459196, ISSN: 0268-3768, [retrieved on 20141029], DOI: 10.1007/S00170-014-6522-Z
- JIWANG YAN ET AL: "Micro grooving on single-crystal germanium for infrared Fresnel lenses; Micro grooving on single-crystal germanium for infrared Fresnel lenses", JOURNAL OF MICROMECHANICS & MICROENGINEERING, INSTITUTE OF PHYSICS PUBLISHING, BRISTOL, GB, vol. 15, no. 10, 19 August 2005 (2005-08-19), pages 1925 - 1931, XP020091383, ISSN: 0960-1317, DOI: 10.1088/0960-1317/15/10/019
- LI C J ET AL: "Ultra-precision machining of Fresnel lens mould by single-point diamond turning based on axis B rotation", THE INTERNATIONAL JOURNAL OF ADVANCED MANUFACTURING TECHNOLOGY, SPRINGER, LONDON, vol. 77, no. 5, 29 October 2014 (2014-10-29), pages 907 - 913, XP035459196, ISSN: 0268-3768, [retrieved on 20141029], DOI: 10.1007/S00170-014-6522-Z
- JIWANG YAN ET AL: "Micro grooving on single-crystal germanium for infrared Fresnel lenses; Micro grooving on single-crystal germanium for infrared Fresnel lenses", JOURNAL OF MICROMECHANICS & MICROENGINEERING, INSTITUTE OF PHYSICS PUBLISHING, BRISTOL, GB, vol. 15, no. 10, 19 August 2005 (2005-08-19), pages 1925 - 1931, XP020091383, ISSN: 0960-1317, DOI: 10.1088/0960-1317/15/10/019

## Beschreibung

Die vorliegende Erfindung betrifft ein Verfahren zum Herstellen einer Freiformfresnelfläche durch spanende Bearbeitung eines Ausgangskörpers. Daneben betrifft die Erfindung ein Verfahren zum Erstellen eines Konstruktionsdatensatzes für die Herstellung einer Freiformfresnelfläche und ein Brillenglas mit einer Freiformfresnelfläche.

Aus C.J. Li et al. "Ultra-precision machining of Fresnel lens mould by singlepoint diamond turning based on axis B rotation", Int. J. Adv. Manuf. Technol. (2015) 77, 907-913 und aus J. Yan et al. "Micro grooving on single-crystal germanium for infrared Fresnel lenses", J. Micromech. Microeng. 15 (2005), 1925-1931sind sphärische Fresnel-Linsen bekannt.

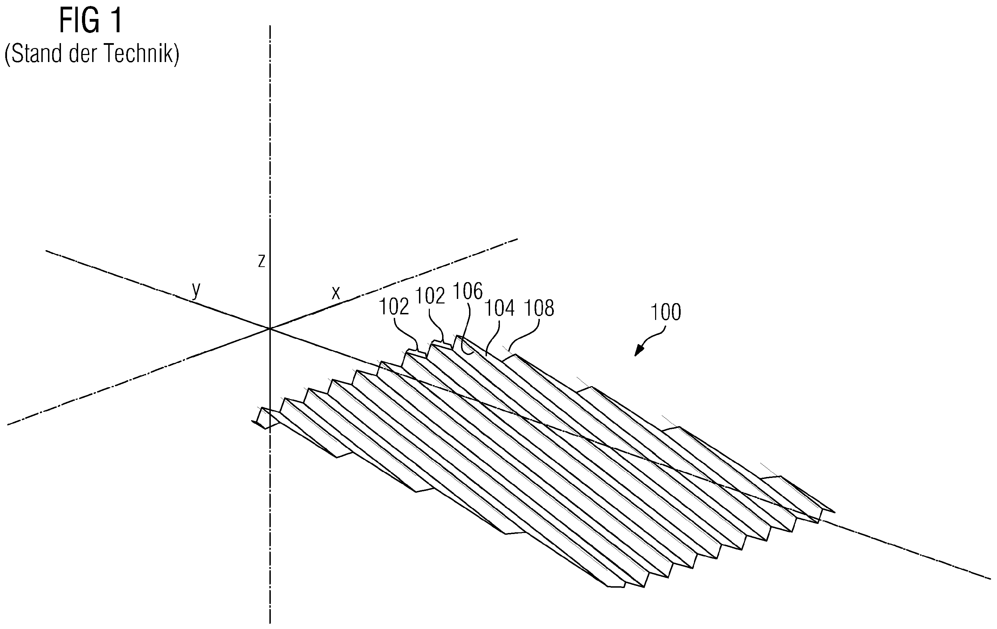

Als Freiformfresnelfläche bezeichnet man eine durch ein Polynom beschriebene Freiformfläche, die durch mehrfachen Versatz in Richtung ihrer z-Achse um einen vorzugsweise konstanten Betrag und durch den jeweiligen Beschnitt an einer Trägerfläche einerseits und einer vorzugsweise parallelen oder vorzugsweise konzentrischen Fläche andererseits gebildet wird. Eine Freiformfresnelfläche 100 ist beispielhaft in Figur 1 dargestellt. In der Figur sind die einzelne Fresnelfacetten 102 mit ihren jeweiligen Fresnelsegmentflächen 104 und Rückflanken 106 sowie den Schnittlinien 108 mit der Trägerfläche zu erkennen. Die Trägerfläche kann eben oder gekrümmt sein. Ihr Ursprung fällt mit dem Ursprung des Polynoms zusammen. Der Ursprung der vorzugsweise parallelen oder vorzugsweise konzentrischen Fläche ist um einen bestimmten Betrag in z-Richtung versetzt und erzeugt die Strukturtiefe der Fresnelsegmentfläche.

Beispiele für Freiformfresnelflächen zeigen die DE 10 2009 010 537 A1 und die DE 10 2009 010 538 A1, wobei letztere auch ein Verfahren zum Herstellen einer Freiformfresnelflächen beschreibt. Zum Einsatz kommen Freiformfresnelflächen bspw. in Datenbrillen oder ähnlichen Vorrichtungen, wie sie bspw. in US 5,369,415, in US 6,204,974 B1, in US 2010/0260455 A1 oder WO 2006/013565 A1 beschrieben sind.

Die Herstellung der Freiformfresnelfläche (entweder als Originalteil oder als Spritzgussform bspw. für die industrielle Herstellung) erfolgt durch Zustellung eines spanabhebenden Werkzeuges in Richtung der z-Achse bis zu dem von der mathematischen Beschreibung für die jeweilige x-y-Position vorgegebenen z-Wert.

Eine erste Aufgabe der vorliegenden Erfindung ist es, ein vorteilhaftes Verfahren zum Herstellen von Freiformfresnelflächen für ein Brillenglas zur Verfügung zu stellen.

Eine zweite Aufgabe der Erfindung ist es, ein computerimplementiertes Verfahren zum Erstellen eines vorteilhaften Konstruktionsdatensatzes für die Herstellung einer Freiformfresnelfläche für ein Brillenglas zur Verfügung zu stellen. Eine dritte Aufgabe der Erfindung ist es, ein vorteilhaftes Brillenglas zur Verfügung zu stellen.

Die ersten beiden Aufgaben werden durch ein Verfahren zum Herstellen von Freiformfresnelflächen für ein Brillenglas nach Anspruch 1 bzw. ein computerimplementiertes Verfahren zum Erstellen eines vorteilhaften Konstruktionsdatensatzes für die Herstellung einer Freiformfresnelfläche für ein Brillenglas nach Anspruch 6 gelöst. Die dritte Aufgabe wird durch eine Freiformfresnelfläche nach Anspruch 13 gelöst. Die abhängigen Ansprüche enthalten vorteilhafte Ausgestaltungen der Erfindung.

Im erfindungsgemäßen Verfahren zum Herstellen einer Freiformfresnelfläche für ein Brillenglas mit einer Anzahl von jeweils eine Fresnelsegmentfläche und eine Rückflanke aufweisenden Fresnelfacetten, erfolgt die Herstellung der Freiformfresnelfläche mittels spanender Bearbeitung eines Ausgangskörpers auf der Basis von Konstruktionsdaten für die Freiformfresnelfläche. Die Konstruktionsdaten für die Freiformfresnelfläche basieren auf:
- einer Trägerfläche der Freiformfresnelfläche, die in einem Koordinatensystem mit einer x-Richtung, einer y-Richtung und einer z-Richtung definiert ist;
- einer Schar von in z-Richtung des Koordinatensystems gestaffelten, zur x-x-Ebene der Trägerfläche geneigten Freiformflächen, wobei jede der Freiformflächen jeweils die Fresnelsegmentfläche einer Fresnelfacette definiert;
- einer Schar von Schnittkurven entlang derer die Freiformflächen der Schar von Freiformflächen die Trägerfläche schneiden, wobei die Projektion der Schnittkurven auf die x-y-Ebene keinen Kreisbogen ergibt;
- Kreiszylindermantelflächen oder Kegelmantelflächen, deren Kreiszylinderachsen bzw. Kegelachsen senkrecht auf der x-y-Ebene des Koordinatensystems stehen, wobei jede Kreiszylindermantelfläche bzw. Kegelmantelfläche jeweils eine bestimmte Freiformfläche aus der Schar von Freiformflächen in Höhe der Trägerfläche schneidet und zudem die jeweils in z-Richtung unmittelbar unter der bestimmten Freiformfläche angeordnete Freiformfläche schneidet, so dass der Schnitt mit der bestimmten Freiformfläche eine obere Schnittlinie und der Schnitt mit der in z-Richtung unmittelbar darunter angeordneten Freiformfläche eine untere Schnittlinie festlegen. Der sich zwischen der oberen Schnittlinie und der unteren Schnittlinie erstreckende Bereich der Kreiszylindermantelfläche bzw. Kegelmantelfläche definiert dann die Rückflanke der zur ausgewählten Freiformfläche gehörenden Fresnelfacette;
Das Herstellen der Freiformfresnelfläche erfolgt dann mittels Ausformens der Fresnelsegmentflächen und der Rückflanken der Fresnelfacetten durch kreisbahnförmiges spanendes Bearbeiten des Ausgangskörpers auf der Basis der Konstruktionsdaten, wobei Material von dem Ausgangskörper abgetragen wird, bis für jede Fresnelfacette die Fresnelsegmentfläche und die Rückflanke freigelegt sind.

Bei der spanenden Herstellung der Fläche folgt die Bewegung des zur Herstellung verwendeten Werkzeuges einer auf die x-y-Ebene projizierten Kreisbahn**.** Dies ist im Stand der Technik im

Bereich der Berandung der Fresnelfacetten und insbesondere bei den Rückflanken nicht möglich, da die Projektion der die Form vorgebenden räumlichen Schnittkurven auf die x-y-Ebene keinen Kreisbogen ergibt. In dem erfindungsgemäßen Verfahren wird dagegen aufgrund der Zuhilfenahme der Kreiszylindermantelflächen oder Kegelmantelflächen für das Erstellen der Konstruktionsdaten erreicht, dass die Projektion der Ränder der Fresnelfacetten auf die x-y-Ebene Kreisbahnen darstellen. Dadurch wird die Fertigung der Fresnelsegmentflächen und der Rückflanken mit einem auf konzentrischen Kreisbahnen geführten Werkzeug möglich. Mit anderen Worten, beim kreisbahnförmigen spanenden Bearbeiten des Ausgangskörpers kann die Bewegung des verwendeten Werkzeugs einer auf die x-y-Ebene projizierten Kreisbahn folgen, was die Steuerung der Werkzeugmaschine für die spanende Herstellung der Freiformfresnelfläche vereinfacht. Die für das kreisbahnförmige spanende Bearbeiten des Ausgangskörpers benötigten Zustellwerte des verwendeten Werkzeugs in z-Richtung können unter Berücksichtigung der Position der Kreiszylinderachse bzw. der Kegelachse in Zylinderkoordinaten umgerechnet werden.

Im Rahmen des erfindungsgemäßen Verfahrens ist es vorteilhaft, wenn der Ursprung des Koordinatensystems für die Beschreibung der Freiformfresnelfläche derart definiert ist, dass dieser mittig in der Trägerfläche liegt, so dass eine durch die Freiformfresnelfläche gelegte Ausgleichsebene senkrecht zur z-Achse des Systems steht
Im Rahmen der Erfindung ist die Form der Kreiszylindermantelflächen bzw. Kegelmantelflächen derart konstruiert, dass die oberen Schnittlinien jeweils an die Form der Schnittkurve der jeweiligen bestimmten Freiformfläche mit der Trägerfläche möglichst gut angenähert sind. Dies kann im Falle von Kreiszylindermantelflächen durch geeignete Wahl des Radius des Kreiszylinders und bei Kegelmantelflächen durch geeignete Wahl des Kegelwinkels und des Abstand der Kegelspitze von der x-y-Ebene erreicht werden. Eine gute Annäherung der oberen Schnittlinie an die Form der Schnittkurve der jeweiligen bestimmten Freiformfläche mit der Trägerfläche kann erreicht werden, wenn eine ausgewählte Kreiszylindermantelfläche oder Kegelmantelfläche derart konstruiert ist, dass sie durch die Schnittkurvenendpunkte einer ausgewählten Schnittkurve der Schar von Schnittkurven und einen Punkt auf der ausgewählten Schnittkurve, der zwischen den beiden Schnittkurvenendpunkten dieser Schnittkurve liegt, verläuft. Dabei ist es vorteilhaft, wenn der Punkt zwischen den beiden Schnittkurvenendpunkten der ausgewählten Schnittkurve zumindest näherungsweise in der Mitte zwischen den beiden Schnittkurvenendpunkten liegt. Außerdem ist es vorteilhaft, wenn die ausgewählte Schnittkurve eine mittig in der Schar von Schnittkurven gelegene Schnittkurve ist. Die Kreiszylinderachsen bzw. Kegelachsen aller anderen Kreiszylindermantelflächen bzw. Kegelmantelflächen sind dann so gewählt, dass sie mit der Kreiszylinderachse bzw. Kegelachse der ausgewählten Kreiszylindermantelfläche bzw. Kegelmantelfläche zusammenfallen. Außerdem verläuft für alle Freiformflächen die einer bestimmten Freiformfläche zugeordnete Kreiszylindermantelfläche bzw. Kegelmantelfläche durch einen Punkt auf der Schnittkurve dieser jeweiligen bestimmten Freiformfläche mit der Trägerfläche. Auch dabei ist es vorteilhaft, wenn der Punkt auf der Schnittkurve der bestimmten Freiformfläche mit der Trägerfläche zumindest näherungsweise in der Mitte zwischen den beiden Schnittkurvenendpunkten der jeweiligen Schnittkurve liegt.

Gemäß der Erfindung wird außerdem ein compterimplementiertes Verfahren zum Erstellen eines Konstruktionsdatensatzes für die Herstellung einer Freiformfresnelfläche für ein Brillenglas mit einer Anzahl von jeweils eine Fresnelsegmentfläche und eine Rückflanke aufweisenden Fresnelfacetten und für die Steuerung einer Werkzeugmaschine zur kreisbahnförmig spanenden Herstellung der Freiformfresnelfläche zur Verfügung gestellt. Diese Verfahren umfassend die Schritte:
- Definieren einer Trägerfläche der Freiformfresnelfläche, die in einem Koordinatensystem mit einer x-Richtung, einer y-Richtung und einer z-Richtung definiert ist;
- Definieren einer Schar von in z-Richtung des Koordinatensystems gestaffelten, in einem Winkel größer 0 und kleiner 90 Grad zur Trägerfläche verlaufenden Freiformflächen, wobei jede der Freiformflächen jeweils die Fresnelsegmentfläche einer Fresnelfacette definiert;
- Ermitteln einer Schar von Schnittkurven entlang derer die Freiformflächen der Schar von Freiformflächen die Trägerfläche schneiden wobei die Projektion der Schnittkurven auf die x-y-Ebene keinen Kreisbogen ergibt;
- Ermitteln von Kreiszylindermantelflächen oder Kegelmantelflächen, deren Kreiszylinderachsen bzw. Kegelachsen senkrecht auf der x-y-Ebene des Koordinatensystems stehen, wobei die Kreiszylindermantelflächen oder Kegelmantelflächen jeweils eine bestimmte Freiformfläche aus der Schar von Freiformflächen in Höhe der Trägerfläche schneidet und zudem die jeweils in z-Richtung unmittelbar unter der bestimmten Freiformfläche angeordnete Freiformfläche schneidet, so dass der Schnitt mit der bestimmten Freiformfläche eine obere Schnittlinie und der Schnitt mit der in z-Richtung unmittelbar darunter angeordneten Freiformfläche eine untere Schnittlinie festlegen. Der sich zwischen der oberen Schnittlinie und der unteren Schnittlinie erstreckende Bereich der Kreiszylindermantelfläche bzw. Kegelmantelfläche definiert dann die Rückflanke der zur ausgewählten Freiformfläche gehörenden Fresnelfacette.

Typischerweise umfasst das Erstellen des Konstruktionsdatensatzes auch ein Ermitteln von Zylinderkoordinaten für eine Ausformung der Fresnelsegmentflächen und Rückflanken der Fresnelfacetten durch kreisbahnförmige Bearbeitung des Ausgangskörpers mittels eines spanenden Werkzeugs, wobei die benötigten Zustellwerte für das Werkzeug in z-Richtung unter Berücksichtigung der Position der Kreiszylinderachse bzw. der Kegelachse ermittelt werden.

Im Rahmen des erfindungsgemäßen Verfahrens zum Erstellen eines Konstruktionsdatensatzes ist es vorteilhaft, wenn der Ursprung des Koordinatensystems für die Beschreibung der Freiformfresnelfläche derart definiert ist, dass dieser mittig in der Trägerfläche liegt.

Im Rahmen der Erfindung wird die Form der Kreiszylindermantelflächen bzw. Kegelmantelflächen derart konstruiert, dass die oberen Schnittlinien jeweils an die Form der Schnittkurve der jeweiligen bestimmten Freiformfläche mit der Trägerfläche möglichst gut angenähert sind. Dies kann bspw. dadurch geschehen, dass eine ausgewählte Kreiszylindermantelfläche oder Kegelmantelfläche konstruiert wird, indem sie durch die Schnittkurvenendpunkte einer ausgewählten Schnittkurve der Schar von Schnittkurven und einen Punkt auf der ausgewählten Schnittkurve, der zwischen den beiden Schnittkurvenendpunkten dieser Schnittkurve liegt, verlaufend angeordnet wird. Dabei ist es vorteilhaft, wenn der Punkt zwischen den beiden Schnittkurvenendpunkten der ausgewählten Schnittkurve zumindest näherungsweise in der Mitte zwischen den beiden Schnittkurvenendpunkten gelegt wird. Außerdem ist es vorteilhaft, wenn als die ausgewählte Schnittkurve eine mittig in der Schar von Schnittkurven gelegene Schnittkurve ausgewählt wird. Die Kreiszylinderachsen bzw. Kegelachsen aller anderen Kreiszylindermantelflächen bzw. Kegelmantelflächen werden dann derart angeordnet, dass sie mit der Kreiszylinderachse bzw. Kegelachse der ausgewählten Kreiszylindermantelfläche bzw. Kegelmantelfläche zusammenfallen. Außerdem wird die einer bestimmten Freiformfläche zugeordnete Kreiszylindermantelfläche bzw. Kegelmantelfläche durch einen Punkt auf der Schnittkurve der bestimmten Freiformfläche mit der Trägerfläche verlaufend angeordnet. Auch dabei ist es vorteilhaft, wenn der Punkt auf der Schnittkurve der bestimmten Freiformfläche mit der Trägerfläche zumindest näherungsweise in der Mitte zwischen den beiden Schnittkurvenendpunkten der jeweiligen Schnittkurve liegt.

Sowohl im erfindungsgemäßen Verfahren zum Herstellen einer Freiformfresnelfläche als auch im erfindungsgemäßen Verfahren zum Erstellen eines Konstruktionsdatensatzes können, wenn die Kreiszylindermantelflächen oder Kegelmantelflächen Kreiszylindermantelflächen sind, nach der Konstruktion der Fresnelsegmentflächen und der Rückflanken mit Hilfe der Kreiszylindermantelflächen Kegelmantelflächen durch die Fresnelsegmentflächen gelegt werden, wobei die zugehörigen Kegel hinsichtlich ihres Kegelwinkels und der Position ihrer Spitzen über der x-y-Ebene so dimensioniert sind, dass sie jeweils zwei benachbarte Fresnelsegmentflächen durchgehend schneiden und wobei der sich zwischen den Schnittlinien einer Kegelmantelfläche mit den benachbarten Fresnelsegmentflächen befindliche Abschnitt der Kegelmantelfläche die Rückflanke zwischen den benachbarten Fresnelsegmentflächen bildet. In dieser Ausgestaltung des Verfahrens verlaufen die Rückflanken nicht parallel zur z-Richtung, was die spanabhebende Herstellung der Rückflanken vereinfacht. Falls die Kreiszylindermantelflächen oder Kegelmantelflächen Kegelmantelflächen sind, ist diese Weiterbildung nicht nötig.

Gemäß der Erfindung wird außerdem ein Computerprogrammprodukt, aufweisend Softwarekomponenten zum Durchführen eines der erfindungsgemäßen Verfahren zur Verfügung gestellt.

Des Weiteren wird gemäß der Erfindung ein Brillenglas mit einer Freiformfresnelfläche zur Verfügung gestellt. Die Freiformfresnelfläche weist eine Anzahl von Fresnelfacetten mit jeweils einer als Freiformfläche, welche keine Spiegel- und Rotationssymmetrie aufweist, ausgebildeten Fresnelsegmentfläche und eine Rückflanke auf sowie eine Strukturtiefe, die in einem Koordinatensystem mit einer x-Richtung, einer y-Richtung und einer z-Richtung entlang der z-Richtung gegeben ist. Im erfindungsgemäßen Brillenglas sind die Fresnelsegmentflächen und die Rückflanke jeweils durch Linien begrenzt, deren Projektion auf die x-y-Ebene des Koordinatensystems Kreislinienausschnitte in der x-y-Ebene sind, was für die spanende Bearbeitung während der Herstellung der Freiformfresnelfläche vorteilhaft ist, da die Bewegung des zur Herstellung verwendeten Werkzeuges einer auf die x-y-Ebene projizierten Kreisbahn folgen kann. Dies ist im Hinblick auf die Herstellung dieser Fläche im Brillenglas vorteilhaft, da die Bewegung des zur Herstellung der Freiformfresnelfläche verwendeten Werkzeuges einer auf die x-y-Ebene projizierten Kreisbahn folgen kann.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt ein Beispiel für eine Freiformfresnelfläche nach Stand der Technik.
- Figur 2: zeigt einen Schritt in einem Verfahren zum Erzeugen einer Freiformfresnelfläche nach Stand der Technik.
- Figur 3: zeigt einen weiteren Schritt in dem Verfahren zum Erzeugen einer Freiformfresnelfläche nach Stand der Technik.
- Figur 4: zeigt einen ersten Schritt eines Ausführungsbeispiels für das erfindungsgemäße Verfahren zum Erstellen eines Konstruktionsdatensatzes für die Herstellung einer Freiformfresnelfläche.
- Figur 5: zeigt einen weiteren Schritt des Ausführungsbeispiels für das erfindungsgemäße Verfahren.
- Figur 6: zeigt noch einen weiteren Schritt des Ausführungsbeispiels für das erfindungsgemäße Verfahren.
- Figur 7: zeigt noch einen weiteren Schritt des Ausführungsbeispiels für das erfindungsgemäße Verfahren.
- Figur 8: zeigt Kegelmantelflächen, welche dazu verwendet werden, Konstruktionsdaten für geneigte Rückflanken der Fresnelfacetten einer Freiformfresnelfläche zu generieren.
- Figur 9: zeigt eine erste Darstellung zur Erläuterung der Dimensionierung der Kegelmantelflächen aus Figur 8.
- Figur 10: zeigt eine zweite Darstellung zur Erläuterung der Dimensionierung der Kegelmantelflächen aus Figur 8.
- Figur 11: zeigt eine Freiformfresnelfläche mit geneigten Rückflanken.
- Figur 12: zeigt ein Brillenglas mit einer Freiformfresnelfläche.

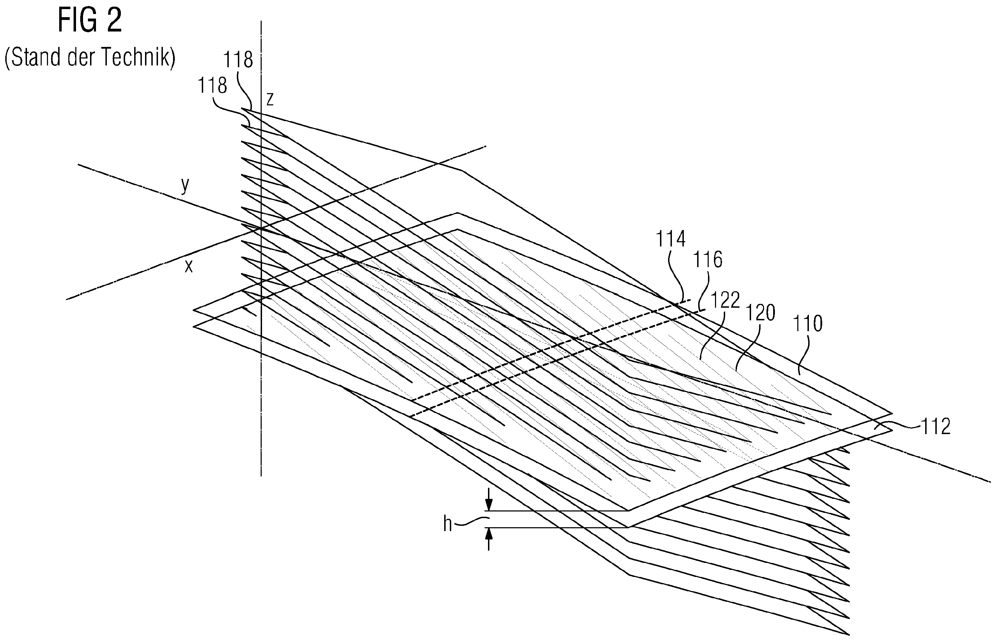

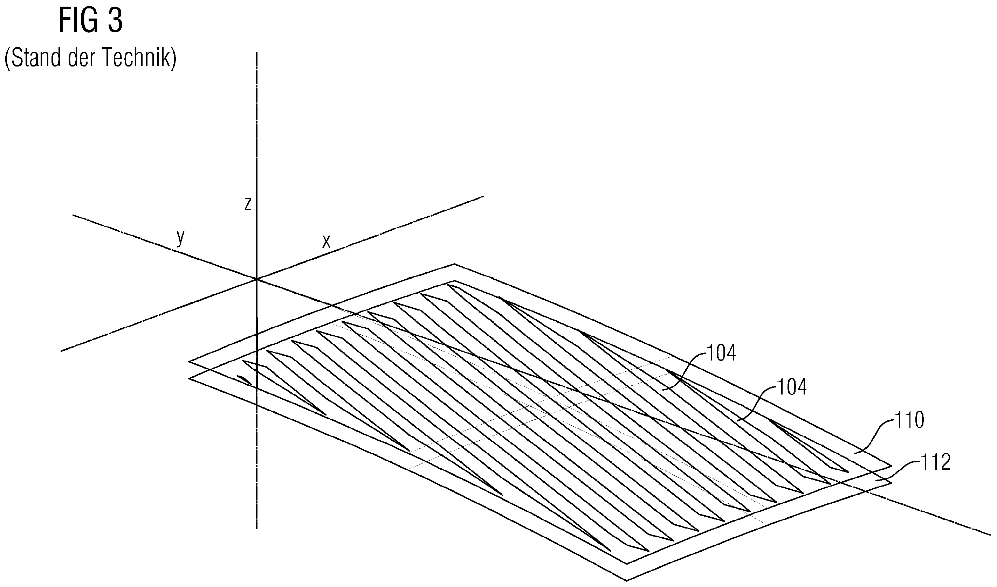

Bevor auf ein Ausführungsbeispiel für die Erfindung eingegangen wird, wird anhand der Figuren 2 und 3 ein Beispiel für das Erzeugen einer Freiformfresnelfläche nach einem Verfahren gemäß Stand der Technik erläutert.

Wie in Figur 2 dargestellt ist, liegt im Verfahren gemäß Stand der Technik der Ursprung der Freiformfresnelfläche außerhalb der genutzten Fläche (Flächenapertur). Die Krümmungen von Trägerfläche 110 und konzentrischer Fläche 112 sind durch äquatoriale Linien 114, 116 veranschaulicht. Der Abstand h der beiden Flächen 110, 112 in Richtung der z-Achse erzeugt die Strukturtiefe und damit die Breite der einzelnen Fresnelsegmentflächen 104.

Mathematisch beschrieben wird die Freiformfresnelfläche wie folgt: $z = {z}_{F} - h ⋅ \left[floor\left(\frac{{z}_{F} - {z}_{T}}{h}\right)\right]$ mit: ${z}_{T} = \frac{{c}_{T} ⋅ {r}^{2}}{1 + \sqrt{1 - \left(1+{k}_{T}\right) ⋅ {c}_{T}^{2} ⋅ {r}^{2}}}$ ${z}_{F} = \frac{{c}_{F} ⋅ {r}^{2}}{1 + \sqrt{1 - \left(1+{k}_{F}\right) ⋅ {c}_{F}^{2} ⋅ {r}^{2}}} + {\sum }_{i = 1}^{N} {A}_{i} \left(x, y\right)$ ${r}^{2} = {x}^{2} + {y}^{2}$

Hierbei bezeichnet der Index "F" die Größen der Freiformfresnelfläche, während der Index "T" die Größen der Trägerfläche 110 kennzeichnet. Der Buchstabe h bezeichnet die Strukturtiefe der Fresnelsegmentfläche, c die Krümmung und k die Konizität der jeweiligen Fläche. Mit A werden die Koeffizienten der Freiformfläche bezeichnet.

Die Figur 2 zeigt die Konstruktion der Freiformfresnelfläche entsprechend der mathematischen Beschreibung. Dargestellt sind in z-Richtung gestaffelte Freiformflächen 118 sowie die Trägerfläche 110 mit der konzentrischen Fläche 112. Jede der Freiformflächen 118 erzeugt mit der Trägerfläche 110 und der konzentrischen Fläche 112 je eine räumliche Schnittkurve 120, 122, deren Form von der Form der Freiformfläche 118 und der Krümmung von Träger- und konzentrischer Fläche abhängt. (die oberste und unterste Freiformfläche schneidet jeweils nur die Träger- bzw. konzentrische Fläche). Die erzeugten Schnittkurven (120, 122) bilden die jeweils äußere bzw. innere Begrenzung der einzelnen Fresnelsegmentflächen 104. In Figur 3 sind die durch den Beschnitt der Freiformflächen 118 erzeugten Fresnelsegmentflächen 104 dargestellt.

Bis zu dem in Figur 3 dargestelltem Zustand entspricht die konstruierte Fläche der mathematischen Beschreibung. Eine reale Fläche, die z.B. durch ein spanendes Verfahren in einem Stück Material hergestellt wird, weist jedoch zwischen den Fresnelsegmentflächen auch die in Figur 1 zu erkennenden Rückflanken 106 auf. Die Rückflanken 106 können (z.B. aus technologischen Gründen) gegen die x-y-Ebene geneigt sein. Sie folgen z.B. den Schnittkurven auf der konzentrischen Fläche 112 und begrenzen die Fresnelsegmentflächen bevor sie die Trägerfläche 110 schneiden.

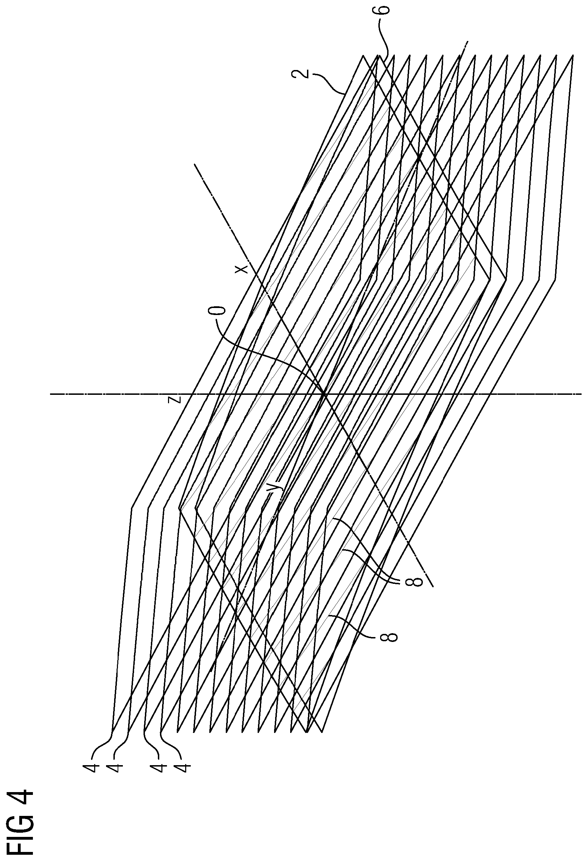

Nachfolgend wird anhand der Figuren 4 bis 7 ein Ausführungsbeispiel für das erfindungsgemäße Verfahren zum Erstellen eines Konstruktionsdatensatzes für die Herstellung einer Freiformfresnelfläche beschrieben.

Im ersten Schritt des Verfahrens wird der Ursprung 0 der Freiformfresnelfläche näherungsweise mittig in die genutzte Flächenapertur gelegt, sodass eine durch die Freiformfresnelfläche gelegte Ausgleichsebene (x-y-Ebene) senkrecht zur z-Achse des Systems steht. Dies ist in Figur 4 dargestellt, welche neben dem Ursprung 0 auch die Trägerfläche 2, die Freiformflächen 4 und die konzentrische Fläche 6 zeigt.

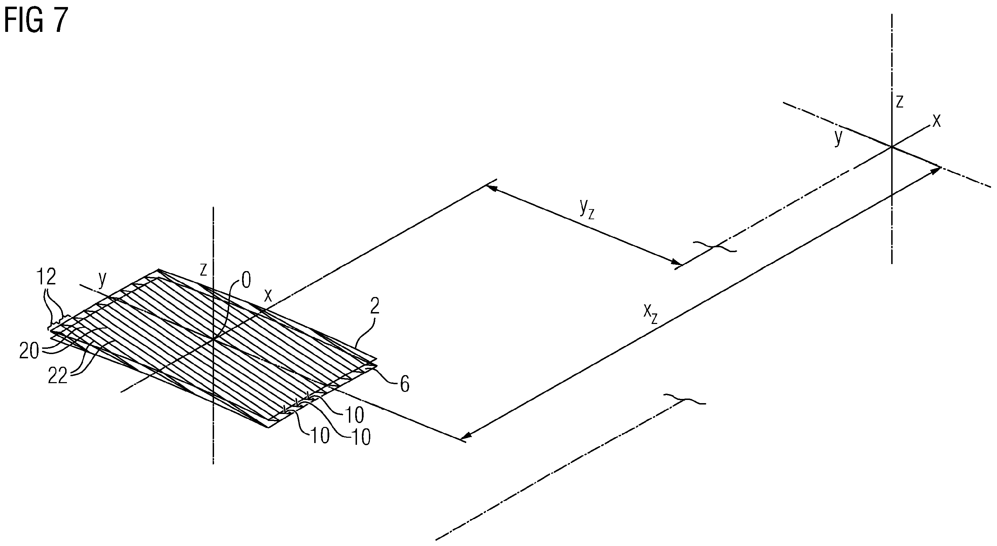

Im Rahmen des erfindungsgemäßen Verfahrens werden wie im Stand der Technik für eine Schar von in z-Richtung gestaffelten Freiformflächen 4, die zur x-y-Ebene der Trägerfläche geneigt sind, so dass sie die Trägerfläche 2 schneiden, die Schnittkurven 8 mit der Trägerfläche 2 ermittelt. Im Ergebnis erhält man eine Schar von Schnittkurven 8, die jeweils den Schnitt einer Freiformfläche 4 mit der Trägerfläche 2 repräsentieren, wobei jede Freiformfläche 4 eine spätere Fresnelsegmentfläche 10 (siehe Figur 7) definiert.

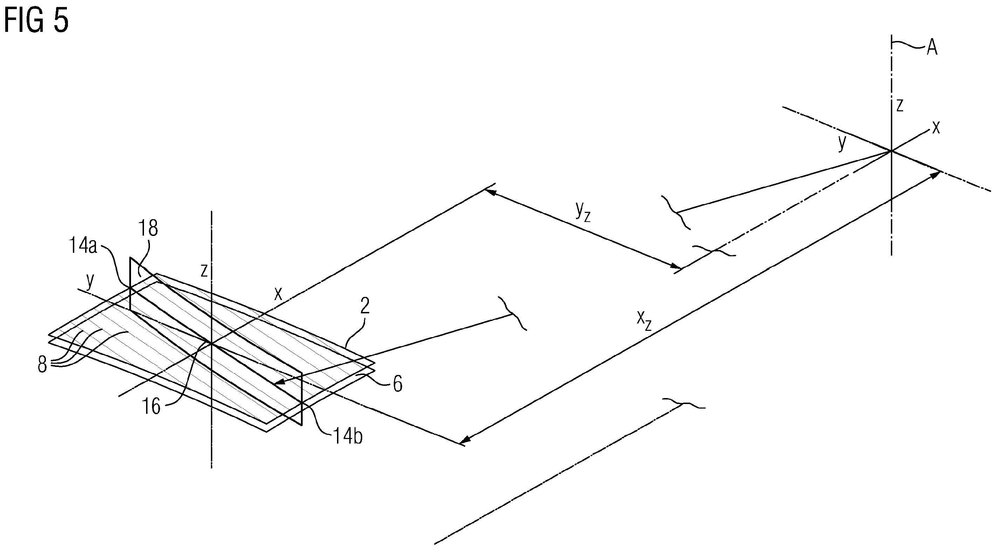

Im nächsten Schritt, der in Figur 5 grafisch dargestellt ist, wird durch die Endpunkte 14a, 14b und einen mittleren Punkt 16 einer ausgewählten - im vorliegenden Ausführungsbeispiel mittleren - Schnittkurve 8 eine Kreiszylindermantelfläche 18 gelegt, deren Kreiszylinderachse A senkrecht auf der x-y-Ebene steht. Die Position der Kreiszylinderachse A bezogen auf den Ursprung 0 der Freiformfresnelfläche wird durch die Koordinaten x_{z} und y_{z} beschrieben. Die Position der Kreiszylinderachse A ist in der Figur aus Platzgründen verkürzt dargestellt.

Aufgrund der beschriebenen Art der Positionierung der Kreiszylindermantelfläche 18 schneidet diese die zur Schnittkurve 8 gehörende Freiformfläche 4 im Bereich der Trägerfläche 2 und bildet eine der Schnittkurve 8 möglichst gut angenäherte Schnittlinie 20 (siehe Figur 7), die nachfolgend obere Schnittlinie 20 genannt wird. Die Projektion der oberen Schnittlinie 20 auf die x-y-Ebene stellt dann einen Ausschnitt aus einer Kreislinie dar, die sich der Projektionen der Schnittkurven 8 auf die x-y-Ebene bestmöglich annähert. Darüber hinaus schneidet die Kreiszylindermantelfläche 18 auch die in der Schar von Freiformflächen 4 unmittelbar unter der die Schnittkurve 8 erzeugenden Freiformfläche 4 gelegene Freiformfläche. Die Schnittlinie 22 der Kreiszylindermantelfläche 18 mit dieser Freiformfläche wird nachfolgend untere Schnittlinie 22 genannt. Auch die Projektion der unteren Schnittlinie auf die x-y-Ebene stellt einen Ausschnitt aus einer Kreislinie dar.

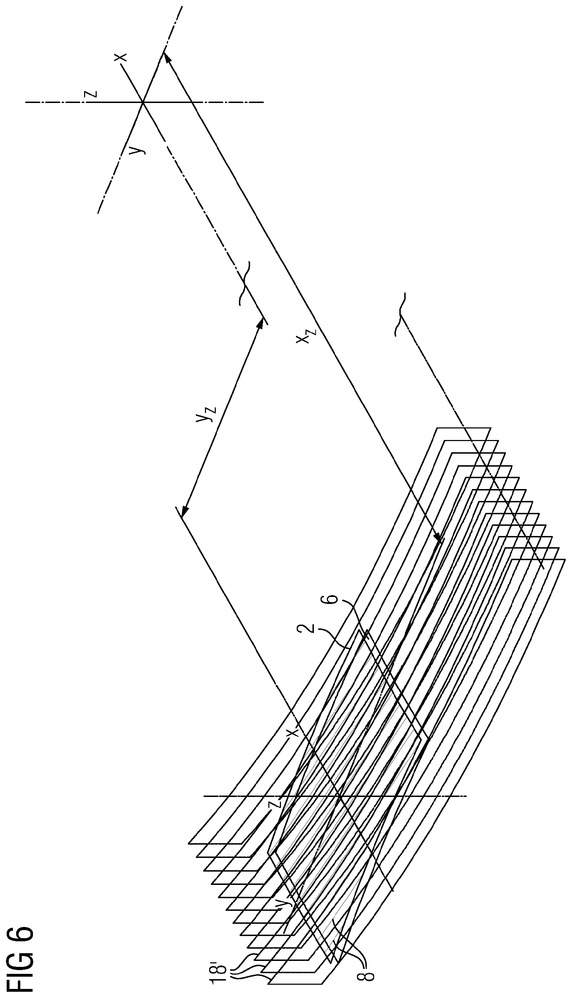

Im darauffolgenden Schritt, der in Figur 6 grafisch dargestellt ist, wird für jede Schnittkurve 8 einer Freiformfläche 4 mit der Trägerfläche 2 eine Kreiszylindermantelfläche 18' durch einen mittleren Punkt auf der jeweiligen Schnittkurve 8 gelegt, wobei die Achse dieser Kreiszylindermantelfläche 18' mit der zuvor erzeugten Kreiszylinderachse A zusammenfällt. Im Ergebnis erhält man einen Satz konzentrischer Kreiszylindermantelflächen 18, 18', von denen jede eine bestimmte Freiformfläche aus der Schar von Freiformflächen 4 im Bereich der Trägerfläche 2 scheidet, wobei jeweils eine obere Schnittlinie 20 gebildet wird. Ebenso wird für den Schnitt der jeweiligen Kreiszylindermantelfläche 18' mit der unter der bestimmten Freiformfläche gelegenen Freiformfläche eine untere Schnittlinie 22 gebildet. Sowohl die oberen Schnittlinien 20 als auch die unteren Schnittlinien 22 stellen in der Projektion auf die x-y-Ebene jeweils Ausschnitte von Kreislinien dar, wobei die Projektion einer oberen Schnittlinie 20 auf die x-y-Ebene der Projektion der Schnittkurve 8 der entsprechenden Freiformfläche 4 mit der Trägerfläche 2 auf die x-y-Ebene bestmöglich angenähert ist.

Die obere Schnittlinien 20 und die untere Schnittlinien 22 definieren im Rahmen der Erfindung anstelle der Schnittkurven einer Freiformfläche 4 mit der Trägerfläche 2 und der konzentrischen Fläche 6 die äußeren und inneren Begrenzungen der einzelnen Fresnelsegmentflächen 10. Dabei ist eine Kreiszylindermantelfläche 18, 18' gleichzeitig äußere Begrenzung einer vorangegangenen und innere Begrenzung einer nachfolgenden Fresnelsegmentfläche 10, so dass der zwischen der oberen Schnittlinie 20 einer Kreiszylindermantelfläche 18, 18' und der untere Schnittlinie 22 der dieser Kreiszylindermantelfläche 18, 18' benachbarten Kreiszylindermantelfläche 18, 18' gelegene Flächenabschnitt der entsprechenden Freiformfläche 4 die Fresnelsegmentfläche 10 einer Fresnelfacette 12 bildet. Der zwischen der oberen Schnittlinie 20 und der unteren Schnittlinien 22 gelegene Flächenabschnitt einer Kreiszylindermantelfläche 18, 18' bilden dann die Rückflanke der Fresnelfacette 12.

In Folge der beschriebenen Konstruktion der Freiformfresnelfläche liegen die begrenzenden Kanten der Fresnelsegmentflächen 10 zwar nicht mehr exakt auf der Trägerfläche 2 bzw. der konzentrischen Fläche 6, sind dafür aber in der Projektion auf die x-y-Ebene gesehen von Kreisbahnsegmenten begrenzt. Beim spanenden Bearbeiten eines Ausgangskörpers zum Herstellen der Freiformfresnelfläche kann die Bewegung des verwendeten Werkzeugs daher einer auf die x-y-Ebene projizierten Kreisbahn folgen. Die für das kreisbahnförmige spanende Bearbeiten des Ausgangskörpers benötigten Bewegungen des verwendeten Werkzeugs können in Polarkoordinaten angegeben werden, wobei die Zustellwerte des Werkzeugs in z-Richtung durch die z-Komponente der Zylinderkoordinaten ausgedrückt werden können.

Eine nach dem beschriebenen Ausführungsbeispiel für das erfindungsgemäße Verfahren gefertigte Freiformfresnelfläche würde senkrecht auf der x-y-Ebene stehende Rückflanken aufweisen. Häufig ist es aber technologisch und auch funktionell von Vorteil, wenn die Rückflanken gegen die x-y-Ebene geneigt sind. Zusammen mit dem Ziel, das bearbeitende Werkzeug auf Kreisbahnen zu führen, ergibt sich daraus ein Bedarf, die Rückflanken als Ausschnitt aus einem Kegelmantel auszuführen. Dabei sollten die Achsen der Kegel vorzugsweise mit den im ersten Ausführungsbeispiel beschriebenen Kreiszylinderachsen zusammenfallen.

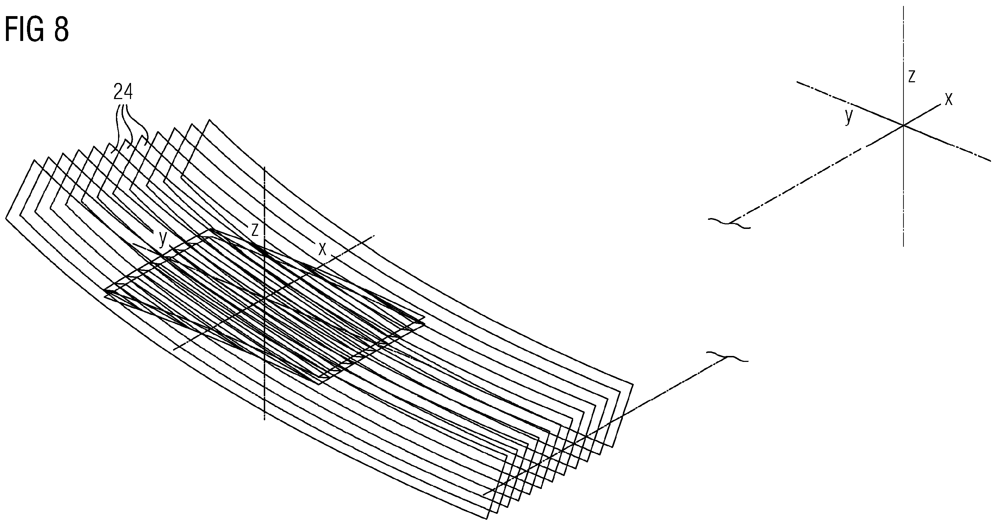

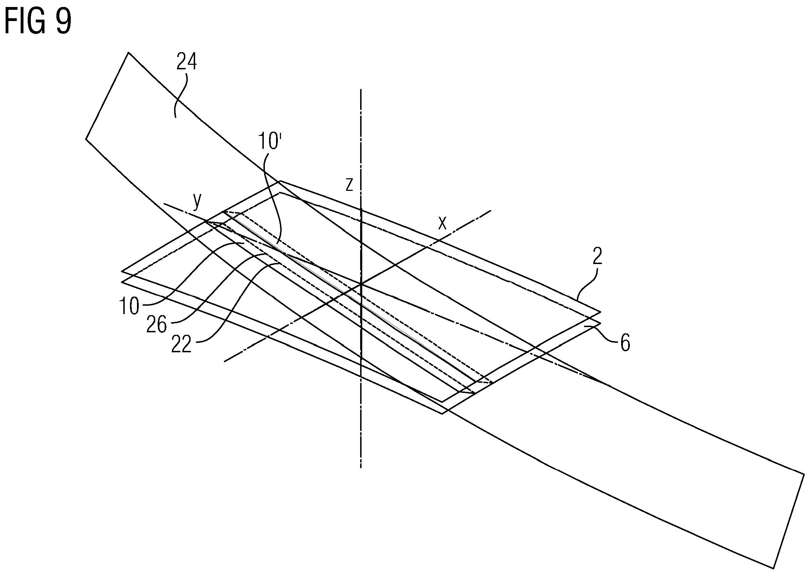

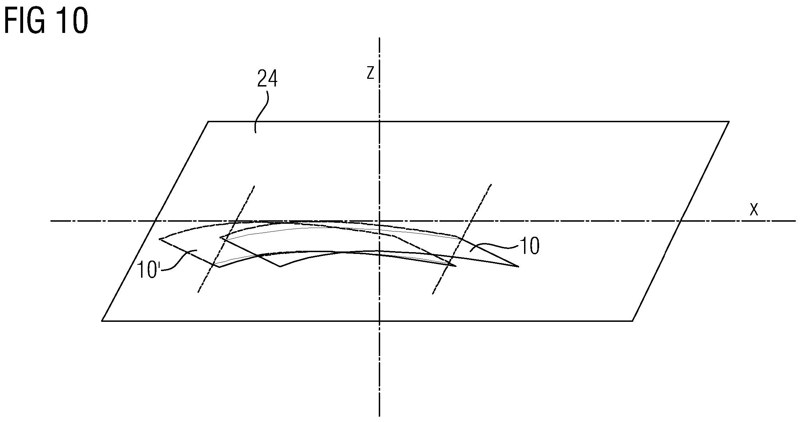

In Figur 8 ist die mit dem zuvor beschriebenen Verfahren hergestellte Freiformfresnelfläche zusammen mit einem Satz koaxialer Kegelmantelflächen 24 dargestellt. Die zugehörigen Kegel sind hinsichtlich ihres Kegelwinkels und der Position ihrer Spitzen über der x-y-Ebene so dimensioniert, dass sie jeweils zwei benachbarte Fresnelsegmentflächen 10, 10' (siehe Figuren 9 und 10) durchgehend schneiden. Nicht durchgehende Schnittlinien würden undefinierte Lücken in der fertigen Freiformfresnelfläche erzeugen.

Eine günstige Dimensionierung der Kegelmantelflächen 24 ergibt sich, wenn die Schnittkurve 26 einer Kegelmantelfläche 24 bei der zweiten der benachbarten Fresnelsegmentflächen 10, 10', also der Fresnelsegmentfläche 10', die untere Schnittlinie 22 tangiert. In den Figuren 9 und 10 ist diese Dimensionierung am Beispiel einer Kegelmantelfläche 24 und der beiden von ihr geschnittenen Fresnelsegmentflächen 10, 10' dargestellt. Figur 9 zeigt dabei eine Kegelmantelfläche und die zwei von ihr geschnittenen Fresnelsegmentflächen 10, 10' in perspektivischer Ansicht. Figur 10 zeigt dieselbe Anordnung mit Blick in Richtung der y-Achse. Man erkennt die durch die Kegelmantelfläche 24 erzeugten Schnittlinien auf den Fresnelsegmentflächen 10, 10'. Der in z-Richtung oberhalb der Schnittlinie des 1. Segmentes 10 und der in z-Richtung unterhalb der Schnittlinie des 2. Segmentes 10' liegende Teil der Segmente wird durch die Kegelmantelfläche abgeschnitten.

Die komplette Freiformfresnelfläche entsteht durch jeweils wechselseitigen Beschnitt der Fresnelsegmentflächen 10 und der Kegelmantelflächen 24, wobei die verbleibenden Abschnitte der Kegelmantelflächen 24 die Rückflanken 28 der Fresnelfacetten (12) bilden.

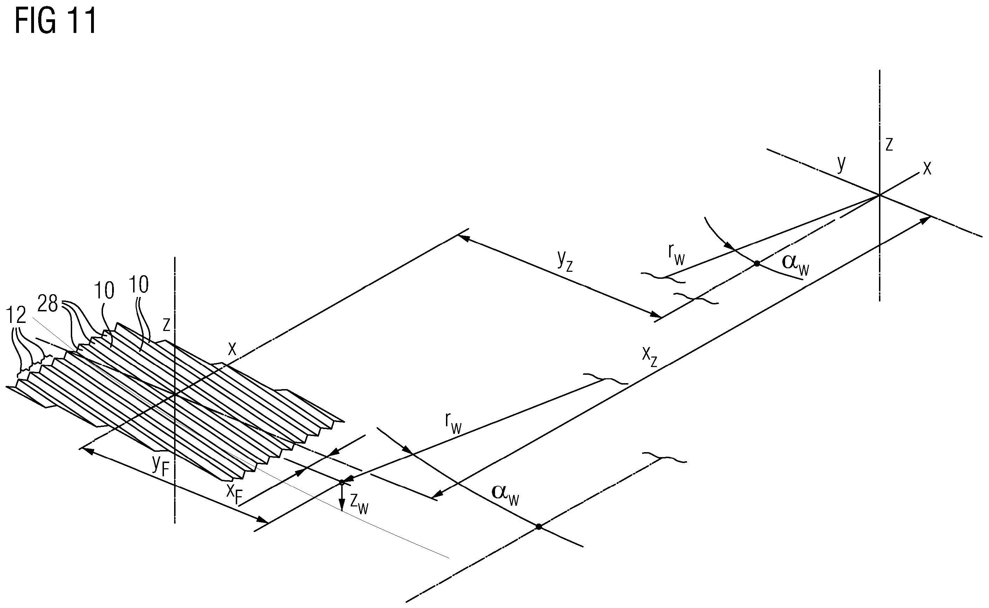

Für die Herstellung der kompletten Freiformfresnelfläche durch kreisbahnförmige Bewegungen des Werkzeuges werden die jeweiligen Zustellwerte z_{w} des Werkzeuges in z-Richtung, entlang der die Strukturtiefe der Freiformfresnelfläche gegeben ist, unter Berücksichtigung der Position der Kegelachse (x_{z};y_{z}) von kartesischen Koordinaten der mathematischen Beschreibung der Freiformfresnelfläche in Polarkoordinaten der Werkzeugmaschine umgerechnet. In Figur 11 sind die fertige Freiformfresnelfläche und die Zusammenhänge der Koordinaten dargestellt. Die Umrechnung erfolgt nach folgenden Formeln: $z = {z}_{W} = f \left({x}_{F}; {y}_{F}\right) = f \left({α}_{W}; {r}_{W}\right)$ ${α}_{W} = arctan \left[\left({y}_{Z}-{y}_{F}\right)/\left({x}_{Z}-{x}_{F}\right)\right]$ ${r}_{W} = \sqrt{{\left({x}_{Z}-{x}_{F}\right)}^{2} + {\left({y}_{Z}-{y}_{F}\right)}^{2}}$

Der Index "F" bezeichnet die Größen der Freiformfresnelfläche, während der Index "W" die Größen des Werkzeuges bzw. der Maschine kennzeichnet. Der Index Z kennzeichnet die Positionskoordinaten der Kegelachse.

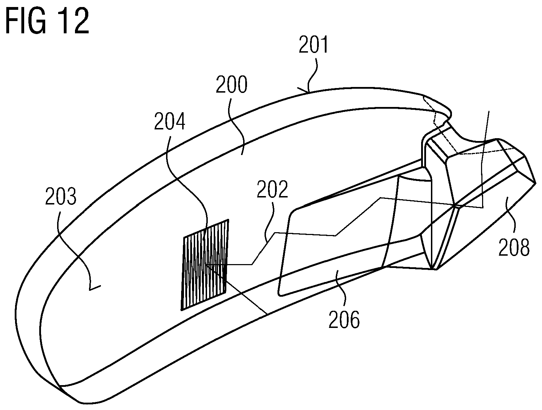

Freiformfresnelflächen, wie sie in der vorliegenden Anmeldung beschrieben sind, finden beispielsweise im Bereich der Datenbrillen Verwendung. Eine Datenbrille umfasst u.a. in der Regel wenigstens ein Brillenglas, durch welches ein ursprünglich von einer Anzeigevorrichtung ausgehender Abbildungsstrahlengang unter mehrfacher Reflektion an den Brillenglasflächen zu einer Auskopplungsstruktur geleitet wird, von der es in Richtung auf das Auge eines Benutzers aus dem Brillenglas ausgekoppelt wird. Ein Beispiel für ein derartiges Brillenglas 100 ist in Figur 12 dargestellt. Das Brillenglas 200 kann, wie in Fig. 12 gezeigt, einen Randverdickungsbereich 206 aufweisen, in dem die Dicke des Brillenglases 200 erhöht ist, um ein optimales Leiten des Abbildungsstrahlengangs 202 zur Auskopplungsstruktur 204 zu erreichen. Das Einkoppeln des Abbildungsstrahlengangs 202 in das Brillenglas 200 erfolgt mit Hilfe eines Prismas 208, welches als Einkopplungsvorrichtung dient. Mittels des Prismas 208, das gelegentlich auch Tubus genannt wird, wird der von einem Display (nicht dargestellt) ausgehende Abbildungsstrahlengang 202 unter einem derartigen Winkel in das Brillenglas 200 eingekoppelt, dass er unter mehrfacher Reflexion an der Außenfläche 201 und der Innenfläche 203 des Brillenglases 200 zur Auskopplungsstruktur 204 gelangen kann. Die Auskopplungsstruktur 204 ist im vorliegenden Beispiel als Freiformfresnelfläche ausgebildet, die gemäß dem beschriebenen Verfahren hergestellt worden ist. Daher sind die Fresnelsegmentflächen und die Rückflanken der Freiformfresnelfläche jeweils durch Linien begrenzt, deren Projektion auf die x-y-Ebene des Koordinatensystems Kreislinienausschnitte in der x-y-Ebene sind.

Die vorliegende Erfindung wurde zu erläuterungszwecken Anhand eines Ausführungsbeispiels im Detail beschrieben. Es versteht sich jedoch, dass die Erfindung nicht auf die Ausführungsbeispiel beschränkt ist. Vielmehr erkennt der Fachmann, dass im Rahmen der Erfindung, wie sie in den Ansprüchen definiert ist, auch von den Ausführungsbeispielen abgewichen werden kann. So besteht beispielweise die Möglichkeit, statt der Kreiszylindermantelflächen von vornherein Kegelmantelflächen zu verwenden, wobei die Konstruktion der oberen und unteren Schnittlinien der Kegelmantelflächen mit den Freiformflächen aus der Schar von Freiformflächen so konstruiert werden können, wie es für die Kreiszylindermantelflächen beschrieben worden ist. Die Erfindung soll daher lediglich durch die angehängten Ansprüche beschränkt sein.

### Bezugszeichenliste

- 0: Ursprung
- 2: Trägerfläche
- 4: Freiformfläche
- 6: konzentrische Fläche
- 8: Schnittkurve
- 10: Fresnelsegmentfläche
- 12: Fresnelfacette
- 14a,b: Endpunkt
- 16: mittlerer Punkt
- 18, 18': Kreiszylindermantelfläche
- 20: obere Schnittlinie
- 22: untere Schnittlinie
- 24: Kegelmantelfläche
- 26: Schnittkurve
- 28: Rückflanke
- 102: Fresnelfacette
- 104: Fresnelsegmentfläche
- 106: Rückflanke
- 108: Schnittlinie
- 110: Trägerfläche
- 112: konzentrischen Fläche
- 114: äquatoriale Linie
- 116: äquatoriale Linie
- 118: Freiformfläche
- 120: Schnittkurve
- 122: Schnittkurve
- 200: Brillenglas
- 201: Außenfläche
- 202: Abbildungsstrahlengang
- 203: Innenfläche
- 204: Auskopplungsstruktur
- 206: Randverdickungsbereich
- 208: Prisma

## Patentansprüche

1. Verfahren zum Herstellen einer Freiformfresnelfläche für ein Brillenglas mit einer Anzahl von jeweils eine Fresnelsegmentfläche (10) und eine Rückflanke (28) aufweisenden Fresnelfacetten (12), in dem die Herstellung der Freiformfresnelfläche mittels spanender Bearbeitung eines Ausgangskörpers auf der Basis von Konstruktionsdaten für die Freiformfresnelfläche erfolgt, wobei die Konstruktionsdaten für die Freiformfresnelfläche basieren auf:
- einer Trägerfläche (2) der Freiformfresnelfläche, die in einem Koordinatensystem mit einer x-Richtung, einer y-Richtung und einer z-Richtung definiert ist;
- einer Schar von in z-Richtung des Koordinatensystems gestaffelten, zur x-y-Ebene der Trägerfläche geneigten Freiformflächen (4), wobei jede der Freiformflächen (4) jeweils die Fresnelsegmentfläche (10) einer Fresnelfacette (12) definiert;
- einer Schar von Schnittkurven (8) entlang derer die Freiformflächen (4) der Schar von Freiformflächen (4) die Trägerfläche (2) schneiden, wobei die Projektion der Schnittkurven auf die x-y-Ebene keine Kreisbögen ergibt;
- Kreiszylindermantelflächen (18, 18') oder Kegelmantelflächen, deren Kreiszylinderachsen (A) bzw. Kegelachsen senkrecht auf der x-y-Ebene des Koordinatensystems stehen, wobei jede Kreiszylindermantelfläche (18, 18') oder Kegelmantelfläche jeweils eine bestimmte Freiformfläche (4) aus der Schar von Freiformflächen in Höhe der Trägerfläche (2) schneidet und zudem die jeweils in z-Richtung unmittelbar unter der bestimmten Freiformfläche (4) angeordnete Freiformfläche (4) schneidet, so dass der Schnitt mit der bestimmten Freiformfläche (4) eine obere Schnittlinie (20) und der Schnitt mit der in z-Richtung unmittelbar darunter angeordneten Freiformfläche eine untere Schnittlinie (22) festlegen, und wobei der sich zwischen der oberen Schnittlinie (20) und der unteren Schnittlinie (22) erstreckende Bereich der Kreiszylindermantelfläche bzw. Kegelmantelfläche die Rückflanke der zur ausgewählten Freiformfläche (4) gehörenden Fresnelfacette (12) definiert, wobei die Form der Kreiszylindermantelflächen (18, 18') bzw. Kegelmantelflächen derart konstruiert ist, dass die oberen Schnittlinien (20) jeweils an die Form der Schnittkurve (8) der jeweiligen bestimmten Freiformfläche (4) mit der Trägerfläche (2) angenähert sind;
wobei zum Herstellen der Freiformfresnelfläche ein Ausformen der Fresnelsegmentflächen (10) und der Rückflanken (28) der Fresnelfacetten (12) durch kreisbahnförmiges spanendes Bearbeiten des Ausgangskörpers auf der Basis der Konstruktionsdaten erfolgt, wobei Material von dem Ausgangskörper abgetragen wird, bis für jede Fresnelfacette (12) die Fresnelsegmentfläche (10) und die Rückflanke (28) freigelegt sind.

2. Verfahren nach Anspruch 1, in dem der Ursprung (0) des Koordinatensystems für die Beschreibung der Freiformfresnelfläche derart definiert ist, dass dieser mittig in der Trägerfläche (2) liegt.

3. Verfahren nach Anspruch 1 oder Anspruch 2, in dem
- eine ausgewählte Kreiszylindermantelfläche (18) oder Kegelmantelfläche derart konstruiert ist, dass sie durch die Schnittkurvenendpunkte (14a, 14b) einer ausgewählten Schnittkurve (8) der Schar von Schnittkurven und einen Punkt (16) auf der ausgewählten Schnittkurve (8), der zwischen den beiden Schnittkurvenendpunkten (14a, 14b) dieser Schnittkurve (8) liegt, verläuft,
- die Kreiszylinderachsen (A) bzw. Kegelachsen aller anderen Kreiszylindermantelflächen (18') bzw. Kegelmantelflächen mit der Kreiszylinderachse (A) bzw. Kegelachse der ausgewählten Kreiszylindermantelfläche (18) bzw. Kegelmantelfläche zusammenfallen und
- für alle Freiformflächen (4) die einer bestimmten Freiformfläche zugeordnete Kreiszylindermantelfläche (18, 18') bzw. Kegelmantelfläche durch einen Punkt auf der Schnittkurve (8) dieser bestimmten Freiformfläche (4) mit der Trägerfläche (2) verläuft.

4. Verfahren nach einem der vorangehenden Ansprüche, in dem die Kreiszylindermantelflächen (18, 18') oder Kegelmantelflächen Kreiszylindermantelflächen (18, 18') sind und in dem nach der Konstruktion der Fresnelsegmentflächen (10) und der Rückflanken mit Hilfe der Kreiszylindermantelflächen (18, 18') Kegelmantelflächen (24) durch die Fresnelsegmentflächen (10) gelegt werden, wobei die zugehörigen Kegel hinsichtlich ihres Kegelwinkels und der Position ihrer Spitzen über der x-y-Ebene so dimensioniert sind, dass sie jeweils zwei benachbarte Fresnelsegmentflächen (10, 10') durchgehend schneiden und wobei der sich zwischen den Schnittlinien einer Kegelmantelfläche (24) mit den benachbarten Fresnelsegmentflächen (10, 10') befindliche Abschnitt der Kegelmantelfläche (24) die Rückflanke (28) zwischen den benachbarten Fresnelsegmentflächen (10, 10') bildet.

5. Verfahren nach einem der vorangehenden Ansprüche, in dem beim kreisbahnförmigen spanenden Bearbeiten des Ausgangskörpers die Bewegung des verwendeten Werkzeugs einer auf die x-y-Ebene projizierten Kreisbahn folgt.

6. Computerimplementiertes Verfahren zum Erstellen eines Konstruktionsdatensatzes für die Herstellung einer Freiformfresnelfläche für ein Brillenglas mit einer Anzahl von jeweils eine Fresnelsegmentfläche (10) und eine Rückflanke (28) aufweisenden Fresnelfacetten (12) und für die Steuerung einer Werkzeugmaschine zur kreisbahnförmig spanenden Herstellung der Freiformfresnelfläche, umfassend die Schritte:
- Definieren einer Trägerfläche (2) der Freiformfresnelfläche, die in einem Koordinatensystem mit einer x-Richtung, einer y-Richtung und einer z-Richtung definiert ist,
- Definieren einer Schar von in z-Richtung des Koordinatensystems gestaffelten, zur x-y-Ebene des Koordinatensystems geneigten Freiformflächen (4), wobei jede der Freiformflächen (4) jeweils die Fresnelsegmentfläche (10) einer Fresnelfacette (12) definiert;
- Ermitteln einer Schar von Schnittkurven (8) entlang derer die Freiformflächen (4) der Schar von Freiformflächen die Trägerfläche (2) schneiden, wobei die Projektion der Schnittkurven auf die x-y-Ebene keinen Kreisbogen ergibt;
- Ermitteln von Kreiszylindermantelflächen (18, 18') oder Kegelmantelflächen, deren Kreiszylinderachsen (A) bzw. Kegelachsen senkrecht auf der x-y-Ebene des Koordinatensystems stehen, wobei jede Kreiszylindermantelfläche (18, 18') oder Kegelmantelfläche jeweils eine bestimmte Freiformfläche (4) aus der Schar von Freiformflächen in Höhe der Trägerfläche (2) schneidet und zudem die jeweils in z-Richtung unmittelbar unter der bestimmten Freiformfläche (4) angeordnete Freiformfläche (4) schneidet, so dass der Schnitt mit der bestimmten Freiformfläche (4) eine obere Schnittlinie (20) und der Schnitt mit der in z-Richtung unmittelbar darunter angeordneten Freiformfläche (4) eine untere Schnittlinie (22) festlegen, und wobei der sich zwischen der oberen Schnittlinie (20) und der unteren Schnittlinie (22) erstreckende Bereich der Kreiszylindermantelfläche (18, 18') bzw. Kegelmantelfläche die Rückflanke (28) der zur ausgewählten Freiformfläche (4) gehörenden Fresnelfacette (12) definiert, wobei die Form der Kreiszylindermantelflächen (18, 18') bzw. Kegelmantelflächen derart konstruiert werden, dass die oberen Schnittlinien (20) jeweils an die Form der Schnittkurve (8) der jeweiligen bestimmten Freiformfläche (4) mit der Trägerfläche (2) angenähert sind.

7. Verfahren nach Anspruch 6, außerdem umfassend:
Ermitteln von Zylinderkoordinaten für eine Ausformung der Fresnelsegmentflächen (10) und Rückflanken (28) der Fresnelfacetten durch kreisbahnförmige Bearbeitung des Ausgangskörpers mittels eines spanenden Werkzeugs, wobei die benötigten Zustellwerte für das Werkzeug in z-Richtung unter Berücksichtigung der Position der Kreiszylinderachse (A) bzw. der Kegelachse ermittelt werden.

8. Verfahren nach Anspruch 6 oder Anspruch 7, in dem der Ursprung (0) des Koordinatensystems für die Beschreibung der Freiformfresnelfläche derart definiert ist, dass dieser mittig in der Trägerfläche (2) liegt.

9. Verfahren nach einem der Ansprüche 6 bis 8, in dem
- eine ausgewählte Kreiszylindermantelfläche (18) oder Kegelmantelfläche konstruiert wird, indem sie durch die Schnittkurvenendpunkte (14a, 14b) einer ausgewählten Schnittkurve (8) der Schar von Schnittkurven und einen Punkt (16) auf der ausgewählten Schnittkurve (8), der zwischen den beiden Schnittkurvenendpunkten (14a, 14b) dieser Schnittkurve (8) liegt, verlaufend angeordnet wird,
- die Kreiszylinderachsen (A) bzw. Kegelachsen aller anderen Kreiszylindermantelflächen (18') bzw. Kegelmantelflächen derart angeordnet werden, dass sie mit der Kreiszylinderachse (A) bzw. Kegelachse der ausgewählten Kreiszylindermantelfläche (18) bzw. Kegelmantelfläche zusammenfallen, und
- für alle Freiformflächen (4) die einer bestimmten Freiformfläche (4) zugeordnete Kreiszylindermantelfläche (18, 18') bzw. Kegelmantelfläche durch einen Punkt auf der Schnittkurve (8) dieser bestimmten Freiformfläche (4) mit der Trägerfläche (2) verlaufend angeordnet wird.

10. Verfahren nach einem der Ansprüche 6 bis 9, in dem die Kreiszylindermantelflächen (18, 18') oder Kegelmantelflächen Kreiszylindermantelflächen (18, 18') sind und in dem nach der Konstruktion der Fresnelsegmentflächen (10) und der Rückflanken mit Hilfe der Kreiszylindermantelflächen (18, 18') Kegelmantelflächen (24) durch die Fresnelsegmentflächen (10) gelegt werden, wobei die zugehörigen Kegel hinsichtlich ihres Kegelwinkels und der Position ihrer Spitzen über der x-y-Ebene so dimensioniert sind, dass sie jeweils zwei benachbarte Fresnelsegmentflächen (10, 10') durchgehend schneiden und wobei der sich zwischen den Schnittlinien einer Kegelmantelfläche (24) mit den benachbarten Fresnelsegmentflächen (10, 10') befindliche Abschnitt der Kegelmantelfläche (24) die Rückflanke (28) zwischen den benachbarten Fresnelsegmentflächen (10, 10') bildet.

11. Computerprogrammprodukt, aufweisend Softwarekomponenten zum Durchführen eines Verfahrens nach einem der Ansprüche 1 bis 5 mittels einer kreisbahnförmig spanenden Werkzeugmaschine.

12. Computerprogrammprodukt, aufweisend Softwarekomponenten zum Durchführen eines Verfahrens nach einem der Ansprüche 6 bis 10.

13. Brillenglas mit einer Freiformfresnelfläche, die eine Anzahl von Fresnelfacetten (12) mit jeweils einer als Freiformfläche, welche keine Spiegel- und Rotationssymmetrie aufweist, ausgebildeten Fresnelsegmentfläche (10) und einer Rückflanke (28) sowie eine Strukturtiefe, die entlang der z-Richtung eines Koordinatensystem mit einer x-Richtung, einer y-Richtung und einer z-Richtung gegeben ist, aufweist, **dadurch gekennzeichnet, dass** die Fresnelsegmentflächen (10) und die Rückflanke (28) jeweils durch Linien (20, 22) begrenzt sind, deren Projektion auf die x-y-Ebene des Koordinatensystems Kreislinienausschnitte in der x-y-Ebene sind.

## Claims

1. Method for producing a freeform Fresnel surface for a spectacle lens having a number of Fresnel facets (12) that each have a Fresnel segment surface (10) and a trailing edge (28), in which the freeform Fresnel surface is produced by way of machining a base body on the basis of construction data for the freeform Fresnel surface, wherein the construction data for the freeform Fresnel surface are based on:
- a carrier surface (2) of the freeform Fresnel surface, which is defined in a coordinate system with an x-direction, a y-direction and a z-direction;
- a family of freeform surfaces (4) which are staggered in the z-direction of the coordinate system and inclined with respect to the x-y plane of the carrier surface, wherein each of the freeform surfaces (4) defines in each case the Fresnel segment surface (10) of a Fresnel facet (12);
- a family of intersection curves (8) along which the freeform surfaces (4) in the family of freeform surfaces (4) intersect the carrier surface (2), wherein the projection of the intersection curves onto the x-y plane does not result in any circular arcs;
- circular cylinder surfaces (18, 18') or cone surfaces whose circular cylinder axes (A) or cone axes are perpendicular to the x-y plane of the coordinate system, wherein each circular cylinder surface (18, 18') or cone surface intersects in each case a specific freeform surface (4) from the family of freeform surfaces at the height of the carrier surface (2) and additionally intersects the freeform surface (4) arranged in each case in the z-direction immediately below the specific freeform surface (4), with the result that the intersection with the specific freeform surface (4) defines an upper intersection line (20) and the intersection with the freeform surface that is arranged in the z-direction immediately below it defines a lower intersection line (22), and wherein the region of the circular cylinder surface or cone surface extending between the upper intersection line (20) and the lower intersection line (22) defines the trailing edge of the Fresnel facet (12) belonging to the selected freeform surface (4), wherein the shape of the circular cylinder surfaces (18, 18') or cone surfaces is designed such that the upper intersection lines (20) are each approximated to the shape of the intersection curve (8) of the respective specific freeform surface (4) with the carrier surface (2);
wherein for producing the freeform Fresnel surface, the Fresnel segment surfaces (10) and the trailing edges (28) of the Fresnel facets (12) are formed by circular-path-shaped machining of the base body based on the construction data, wherein material is removed from the base body until the Fresnel segment surface (10) and the trailing edge (28) are exposed for every Fresnel facet (12).

2. Method according to Claim 1, in which the origin (0) of the coordinate system for the description of the freeform Fresnel surface is defined such that it is located centrally in the carrier surface (2).

3. Method according to Claim 1 or Claim 2, in which
- a selected circular cylinder surface (18) or cone surface is constructed such that it extends through the intersection curve end points (14a, 14b) of a selected intersection curve (8) in the family of intersection curves and a point (16) on the selected intersection curve (8) that is located between the two intersection curve end points (14a, 14b) of said intersection curve (8),
- the circular cylinder axes (A) or cone axes of all other circular cylinder surfaces (18') or cone surfaces coincide with the circular cylinder axis (A) or cone axis of the selected circular cylinder surface (18) or cone surface, and
- for all freeform surfaces (4), the circular cylinder surface (18, 18') or cone surface that is assigned to a specific freeform surface extends through a point on the intersection curve (8) of said specific freeform surface (4) with the carrier surface (2).

4. Method according to one of the preceding claims, in which the circular cylinder surfaces (18, 18') or cone surfaces are circular cylinder surfaces (18, 18'), and in which cone surfaces (24) are disposed through the Fresnel segment surfaces (10) after the construction of the Fresnel segment surfaces (10) and the trailing edges using the circular cylinder surfaces (18, 18'), with the associated cones being dimensioned with respect to their cone angle and the position of their tips above the x-y plane such that they continuously intersect in each case two adjacent Fresnel segment surfaces (10, 10') and with the section of the cone surface (24) located between the intersection lines of a cone surface (24) with the adjacent Fresnel segment surfaces (10, 10') forming the trailing edge (28) between the adjacent Fresnel segment surfaces (10, 10').

5. Method according to one of the preceding claims, in which, in the circular-path-shaped machining of the base body, the movement of the used tool follows a circular path that is projected onto the x-y plane.

6. Computer-implemented method for creating a construction data set for the production of a freeform Fresnel surface for a spectacle lens having a number of Fresnel facets (12) each having a Fresnel segment surface (10) and a trailing edge (28) and for the control of a machine tool for the circular-path-shaped machining of the freeform Fresnel surface, comprising the steps of:
- defining a carrier surface (2) of the freeform Fresnel surface, which is defined in a coordinate system with an x-direction, a y-direction and a z-direction;
- defining a family of freeform surfaces (4) which are staggered in the z-direction of the coordinate system and inclined with respect to the x-y plane of the coordinate system, wherein each of the freeform surfaces (4) defines in each case the Fresnel segment surface (10) of a Fresnel facet (12);
- ascertaining a family of intersection curves (8) along which the freeform surfaces (4) in the family of freeform surfaces intersect the carrier surface (2), wherein the projection of the intersection curves onto the x-y plane does not result in any circular arcs;
- ascertaining circular cylinder surfaces (18, 18') or cone surfaces whose circular cylinder axes (A) or cone axes are perpendicular to the x-y plane of the coordinate system, wherein each circular cylinder surface (18, 18') or cone surface intersects in each case a specific freeform surface (4) from the family of freeform surfaces at the height of the carrier surface (2) and additionally intersects the freeform surface (4) arranged in each case in the z-direction immediately below the specific freeform surface (4), with the result that the intersection with the specific freeform surface (4) defines an upper intersection line (20) and the intersection with the freeform surface (4) that is arranged in the z-direction immediately below it defines a lower intersection line (22), and wherein the region of the circular cylinder surface (18, 18') or cone surface extending between the upper intersection line (20) and the lower intersection line (22) defines the trailing edge (28) of the Fresnel facet (12) belonging to the selected freeform surface (4), wherein the shape of the circular cylinder surfaces (18, 18') or cone surfaces is designed such that the upper intersection lines (20) are each approximated to the shape of the intersection curve (8) of the respective specific freeform surface (4) with the carrier surface (2).

7. Method according to Claim 6, furthermore comprising: ascertaining cylinder coordinates for forming the Fresnel segment surfaces (10) and trailing edges (28) of the Fresnel facets by way of circular-path-shaped machining of the base body using a machining tool, wherein the required infeed values for the tool in the z-direction are ascertained taking into account the position of the circular cylinder axis (A) or the cone axis.

8. Method according to Claim 6 or Claim 7, in which the origin (0) of the coordinate system for the description of the freeform Fresnel surface is defined such that it is located centrally in the carrier surface (2).

9. Method according to any one of Claims 6 to 8, in which
- a selected circular cylinder surface (18) or cone surface is constructed by being arranged such that it extends through the intersection curve end points (14a, 14b) of a selected intersection curve (8) in the family of intersection curves and a point (16) on the selected intersection curve (8) that is located between the two intersection curve end points (14a, 14b) of said intersection curve (8),
- the circular cylinder axes (A) or cone axes of all other circular cylinder surfaces (18') or cone surfaces are arranged such that they coincide with the circular cylinder axis (A) or cone axis of the selected circular cylinder surface (18) or cone surface, and
- for all freeform surfaces (4), the circular cylinder surface (18, 18') or cone surface that is assigned to a specific freeform surface (4) is arranged such that it extends through a point on the intersection curve (8) of said specific freeform surface (4) with the carrier surface (2).

10. Method according to any one of Claims 6 to 9, in which the circular cylinder surfaces (18, 18') or cone surfaces are circular cylinder surfaces (18, 18'), and in which cone surfaces (24) are disposed through the Fresnel segment surfaces (10) after the construction of the Fresnel segment surfaces (10) and the trailing edges using the circular cylinder surfaces (18, 18'), with the associated cones being dimensioned with respect to their cone angle and the position of their tips above the x-y plane such that they continuously intersect in each case two adjacent Fresnel segment surfaces (10, 10') and with the section of the cone surface (24) located between the intersection lines of a cone surface (24) with the adjacent Fresnel segment surfaces (10, 10') forming the trailing edge (28) between the adjacent Fresnel segment surfaces (10, 10').

11. Computer program product, having software components for performing a method according to any one of Claims 1 to 5 using a machine tool that cuts in a circular-path-shaped manner.

12. Computer program product, having software components for performing a method according to any one of Claims 6 to 10.

13. Spectacle lens having a freeform Fresnel surface having a number of Fresnel facets (12) that have in each case a Fresnel segment surface (10), which is in the form of a freeform surface that has no mirror and rotational symmetry, and a trailing edge (28) and also having a structure depth, which is defined along the z-direction of a coordinate system with an x-direction, a y-direction and a z-direction, **characterized in that** the Fresnel segment surfaces (10) and the trailing edge (28) are bounded in each case by lines (20, 22), the projections of which onto the x-y plane of the coordinate system are circle line sections in the x-y plane.

## Revendications

1. Procédé de fabrication d'une surface de Fresnel de forme libre pour un verre de lunettes comportant un nombre de facettes de Fresnel (12) présentant chacune une surface de segment de Fresnel (10) et un flanc arrière (28), dans lequel la fabrication de la surface de Fresnel de forme libre est réalisée par usinage par enlèvement de matière d'un corps de départ sur la base de données de construction pour la surface de Fresnel de forme libre, les données de construction de la surface de Fresnel de forme libre étant basées sur :
- une surface support (2) de la surface de Fresnel de forme libre, définie dans un système de coordonnées comprenant une direction x, une direction y et une direction z ;
- une famille de surfaces de forme libre (4), décalées en direction z du système de coordonnées, inclinées par rapport au plan x-y de la surface support, chaque surface de forme libre (4) définissant la surface de segment de Fresnel (10) d'une facette de Fresnel (12) ;
- une famille de courbes d'intersection (8) le long desquelles les surfaces de forme libre (4) de la famille de surfaces de forme libre (4) coupent la surface support (2), la projection des courbes d'intersection sur le plan x-y ne donnant pas des arcs de cercle ;
- des surfaces d'enveloppe de cylindre circulaire (18, 18') ou des surfaces d'enveloppe de cône, dont les axes de cylindre circulaire (A) ou les axes de cône sont perpendiculaires au plan x-y du système de coordonnées, chaque surface d'enveloppe de cylindre circulaire (18, 18') ou surface d'enveloppe de cône coupant une surface de forme libre déterminée (4) de la famille de surfaces de forme libre au niveau de la surface support (2), et coupant en outre la surface de forme libre (4) disposée immédiatement au-dessous de la surface de forme libre déterminée (4) dans la direction z, de sorte que l'intersection avec la surface de forme libre déterminée (4) définit une ligne d'intersection supérieure (20) et que l'intersection avec la surface de forme libre disposée immédiatement au-dessous dans la direction z définit une ligne d'intersection inférieure (22), et la zone de la surface d'enveloppe de cylindre circulaire ou de la surface d'enveloppe de cône s'étendant entre la ligne d'intersection supérieure (20) et la ligne d'intersection inférieure (22) définissant le flanc arrière de la facette de Fresnel (12) appartenant à la surface de forme libre sélectionnée (4), la forme des surfaces d'enveloppe de cylindre circulaire (18, 18') ou des surfaces d'enveloppe de cône étant construite de telle sorte que les lignes d'intersection supérieures (20) se rapprochent respectivement de la forme de la courbe d'intersection (8) de la surface de forme libre déterminée correspondante (4) avec la surface support (2) ;
la fabrication de la surface de Fresnel de forme libre comprenant une mise en forme des surfaces de segment de Fresnel (10) et des flancs arrière (28) des facettes de Fresnel (12) par usinage par enlèvement de matière du corps de départ selon une trajectoire circulaire sur la base des données de construction, de la matière étant enlevée du corps de départ jusqu'à ce que, pour chaque facette de Fresnel (12), la surface de segment de Fresnel (10) et le flanc arrière (28) soient mis à découvert.

2. Procédé selon la revendication 1, dans lequel l'origine (0) du système de coordonnées pour la description de la surface de Fresnel de forme libre est définie de telle sorte qu'elle est située au centre de la surface support (2).

3. Procédé selon la revendication 1 ou la revendication 2, dans lequel
- une surface d'enveloppe de cylindre circulaire (18) ou une surface d'enveloppe de cône sélectionnée est construite de telle sorte qu'elle passe par les points d'extrémité de courbe d'intersection (14a, 14b) d'une courbe d'intersection sélectionnée (8) de la famille de courbes d'intersection et par un point (16) situé sur la courbe d'intersection sélectionnée (8), entre les deux points d'extrémité de courbe d'intersection (14a, 14b) de cette courbe d'intersection (8),
- les axes de cylindre circulaire (A) ou les axes de cône de toutes les autres surfaces d'enveloppe de cylindre circulaire (18') ou surfaces d'enveloppe de cône coïncident avec l'axe de cylindre circulaire (A) ou l'axe de cône de la surface d'enveloppe de cylindre circulaire (18) ou de la surface d'enveloppe de cône sélectionnée, et
- pour toutes les surfaces de forme libre (4), la surface d'enveloppe de cylindre circulaire (18, 18') ou la surface d'enveloppe de cône associée à une surface de forme libre déterminée passe par un point de la courbe d'intersection (8) de cette surface de forme libre déterminée (4) avec la surface support (2).

4. Procédé selon l'une quelconque des revendications précédentes, dans lequel les surfaces d'enveloppe de cylindre circulaire (18, 18') ou les surfaces d'enveloppe de cône sont des surfaces d'enveloppe de cylindre circulaire (18, 18'), et dans lequel, après la construction des surfaces de segment de Fresnel (10) et des flancs arrière à l'aide des surfaces d'enveloppe de cylindre circulaire (18, 18'), des surfaces d'enveloppe de cône (24) sont disposées à travers les surfaces de segment de Fresnel (10), les cônes correspondants étant dimensionnés, en ce qui concerne leur angle au sommet et la position de leur sommet au-dessus du plan x-y, de telle sorte qu'ils coupent chacun de manière continue deux surfaces de segment de Fresnel (10, 10') adjacentes, la partie de la surface d'enveloppe de cône (24) située entre les lignes d'intersection d'une surface d'enveloppe de cône (24) avec les surfaces de segment de Fresnel (10, 10') adjacentes formant le flanc arrière (28) entre les surfaces de segment de Fresnel (10, 10') adjacentes.

5. Procédé selon l'une quelconque des revendications précédentes, dans lequel, lors de l'usinage par enlèvement de matière du corps de départ selon une trajectoire circulaire, le déplacement de l'outil utilisé a lieu sur une trajectoire circulaire projetée sur le plan x-y.

6. Procédé mis en œuvre par ordinateur pour créer un jeu de données de construction destiné à la fabrication d'une surface de Fresnel de forme libre pour un verre de lunettes comportant un nombre de facettes de Fresnel (12) présentant chacune une surface de segment de Fresnel (10) et un flanc arrière (28), et destiné à la commande d'une machine-outil pour la fabrication par usinage selon une trajectoire circulaire de la surface de Fresnel de forme libre, comprenant les étapes suivantes :
- la définition d'une surface support (2) de la surface de Fresnel de forme libre, définie dans un système de coordonnées comprenant une direction x, une direction y et une direction z ;
- la définition d'une famille de surfaces de forme libre (4), décalées en direction z du système de coordonnées et inclinées par rapport au plan x-y du système de coordonnées, chaque surface de forme libre (4) définissant la surface de segment de Fresnel (10) d'une facette de Fresnel (12) ;
- la détermination d'une famille de courbes d'intersection (8) le long desquelles les surfaces de forme libre (4) de la famille de surfaces de forme libre coupent la surface support (2), la projection des courbes d'intersection sur le plan x-y ne donnant pas un arc de cercle ;
- la détermination de surfaces d'enveloppe de cylindre circulaire (18, 18') ou de surfaces d'enveloppe de cône, dont les axes de cylindre circulaire (A) ou les axes de cône sont perpendiculaires au plan x-y du système de coordonnées, chaque surface d'enveloppe de cylindre circulaire (18, 18') ou surface d'enveloppe de cône coupant une surface de forme libre déterminée (4) de la famille de surfaces de forme libre au niveau de la surface support (2), et coupant en outre la surface de forme libre (4) disposée immédiatement au-dessous de ladite surface de forme libre déterminée (4) dans la direction z, de sorte que l'intersection avec la surface de forme libre déterminée (4) définit une ligne d'intersection supérieure (20) et que l'intersection avec la surface de forme libre (4) disposée immédiatement au-dessous dans la direction z définit une ligne d'intersection inférieure (22), la zone de la surface d'enveloppe de cylindre circulaire (18, 18') ou de la surface d'enveloppe de cône s'étendant entre la ligne d'intersection supérieure (20) et la ligne d'intersection inférieure (22) définissant le flanc arrière (28) de la facette de Fresnel (12) appartenant à la surface de forme libre sélectionnée (4), la forme des surfaces d'enveloppe de cylindre circulaire (18, 18') ou des surfaces d'enveloppe de cône étant construite de telle sorte que les lignes d'intersection supérieures (20) se rapprochent respectivement de la forme de la courbe d'intersection (8) de la surface de forme libre déterminée correspondante (4) avec la surface support (2).

7. Procédé selon la revendication 6, comprenant en outre :
la détermination de coordonnées cylindriques pour une mise en forme des surfaces de segment de Fresnel (10) et des flancs arrière (28) des facettes de Fresnel par usinage selon une trajectoire circulaire du corps de départ au moyen d'un outil d'usinage par enlèvement de matière, les valeurs d'avance nécessaires pour l'outil dans la direction z étant déterminées en tenant compte de la position de l'axe de cylindre circulaire (A) ou de l'axe de cône.

8. Procédé selon la revendication 6 ou la revendication 7, dans lequel l'origine (0) du système de coordonnées pour la description de la surface de Fresnel de forme libre est définie de telle sorte qu'elle est située au centre de la surface support (2).

9. Procédé selon l'une quelconque des revendications 6 à 8, dans lequel
- une surface d'enveloppe de cylindre circulaire (18) ou une surface d'enveloppe de cône sélectionnée est construite en étant disposée de telle sorte qu'elle passe par les points d'extrémité de courbe d'intersection (14a, 14b) d'une courbe d'intersection sélectionnée (8) de la famille de courbes d'intersection et par un point (16) situé sur la courbe d'intersection sélectionnée (8), entre les deux points d'extrémité de courbe d'intersection (14a, 14b) de cette courbe d'intersection (8),
- les axes de cylindre circulaire (A) ou les axes de cône de toutes les autres surfaces d'enveloppe de cylindre circulaire (18') ou surfaces d'enveloppe de cône sont disposés de telle sorte qu'ils coïncident avec l'axe de cylindre circulaire (A) ou l'axe de cône de la surface d'enveloppe de cylindre circulaire (18) ou de la surface d'enveloppe de cône sélectionnée, et
- pour toutes les surfaces de forme libre (4), la surface d'enveloppe de cylindre circulaire (18, 18') ou la surface d'enveloppe de cône associée à une surface de forme libre déterminée (4) est disposée de telle sorte qu'elle passe par un point de la courbe d'intersection (8) de cette surface de forme libre déterminée (4) avec la surface support (2).

10. Procédé selon l'une quelconque des revendications 6 à 9, dans lequel les surfaces d'enveloppe de cylindre circulaire (18, 18') ou les surfaces d'enveloppe de cône sont des surfaces d'enveloppe de cylindre circulaire (18, 18'), et dans lequel, après la construction des surfaces de segment de Fresnel (10) et des flancs arrière à l'aide des surfaces d'enveloppe de cylindre circulaire (18, 18'), des surfaces d'enveloppe de cône (24) sont disposées à travers les surfaces de segment de Fresnel (10), les cônes correspondants étant dimensionnés, en ce qui concerne leur angle au sommet et la position de leur sommet au-dessus du plan x-y, de telle sorte qu'ils coupent chacun de manière continue deux surfaces de segment de Fresnel (10, 10') adjacentes, la partie de la surface d'enveloppe de cône (24) située entre les lignes d'intersection d'une surface d'enveloppe de cône (24) avec les surfaces de segment de Fresnel (10, 10') adjacentes formant le flanc arrière (28) entre les surfaces de segment de Fresnel (10, 10') adjacentes.

11. Produit programme d'ordinateur comprenant des composants logiciels destinés à mettre en œuvre un procédé selon l'une quelconque des revendications 1 à 5 au moyen d'une machine-outil d'usinage selon une trajectoire circulaire.

12. Produit programme d'ordinateur comprenant des composants logiciels destinés à mettre en œuvre un procédé selon l'une quelconque des revendications 6 à 10.

13. Verre de lunettes comportant une surface de Fresnel de forme libre présentant un nombre de facettes de Fresnel (12), comprenant chacune une surface de segment de Fresnel (10) réalisée sous la forme d'une surface de forme libre ne présentant ni symétrie de rotation ni symétrie miroir, ainsi qu'un flanc arrière (28), et présentant une profondeur de structure définie le long de la direction z d'un système de coordonnées comprenant une direction x, une direction y et une direction z, **caractérisé en ce que** les surfaces de segment de Fresnel (10) et le flanc arrière (28) sont chacun délimités par des lignes (20, 22) dont la projection sur le plan x-y du système de coordonnées est constituée de portions de lignes circulaires dans le plan x-y.
